# EUROPEAN PATENT APPLICATION

(11) **EP 4 083 806 A1**
(43) Date of publication of application: **02.11.2022**
(21) Application number: 20904708.3
(22) Date of filing: 24.12.2020
(51) Int. Cl.: G06F 13/00

(54) **APPLICATION LINKAGE METHOD, COMPUTER PROGRAM, AND APPLICATION LINKAGE SYSTEM**

(30) Priority: 26.12.2019 US 201962953738 P
(71) Applicant: Sivira Inc., Kita-ku Osaka-shi, Osaka 530-0002 (JP)
(72) Inventor: FUJII, Takashi, Osaka-shi Osaka 5300002 (JP); RYUGO, Toshihiko, Osaka-shi Osaka 5300002 (JP); SATO, Motoki, Osaka-shi Osaka 5300002 (JP)
(74) Representative: Cabinet Beaumont
(86) International application number: PCT/JP2020/048502
(87) International publication number: WO 2021/132483

(57) **Abstract**

The present invention provides an application linkage method, a computer program, and an application linkage system. In this application linkage method, an information terminal device: stores application account data of a user for a first application and a second application, and block chain account data of the user in a block chain system; transmits, in association with the block chain account data, a request for linking the first application and the second application to a first device that provides the first application or a second device that provides the second application; on the basis of the request for linking, causes the first device to transmit, to the block chain system, a request for giving the block chain account data a token based on the result of use of the first application by the user associated with the application account data; and causes the second device to obtain data about the presence or absence of the token given to the block chain account data, the amount of the token, and the content of or conditions for the token.

## Description

### [Technical Field]

This application claims the benefit of the priority right of US Provisional Patent Application No. 62/953738 filed on December 26, 2019, which is incorporated by reference in its entirety.

The present invention relates to an application collaboration method using a blockchain, a computer program, and an application collaboration system.

### [Background Art]

Recently, regarding digital contents (such as games, animations, television contents, radio contents, manga, magazines, and newspapers), not only the consumption of an individual for primary contents (such as playing games, viewing animations, viewing television contents, listening to radio contents, reading manga, reading magazines, and reading newspapers) but also the consumption of a community for n-th order contents is actively carried out. That is, a secondary trade area of digital contents is expanding. In addition, in accordance with the progress of the diversification of media in which individuals (such as contents creators, athletes, and entertainers) are capable of transmitting the contents, as with the digital contents, the range of contents consumption is also expanding for such individuals (such as viewing the private life of a professional athlete through a YouTube (Registered Trademark) channel).

Moreover, the secondary trade area is constructed across a plurality of applications (for example, in the case of a game, the game itself, a video distribution platform, SNS, and the like). In the crossing of the applications in the secondary trade area, information collaboration between the applications is required. In order to carry out the collaboration by reverting activity in one application with activity in the other application, it is necessary to associate accounts in each of the applications of specific a user with each other between the applications.

In the related art, in the application collaboration, an application programming interface (API) for providing user information in one application is developed and provided (such as Patent Document 1).

### [Prior Art Document]

### [Patent Document]

[Patent Document 1] Japanese Patent Laid-Open Publication No. 2019-057778

### [Summary of Invention]

### [Problems to be Solved by Invention]

In the collaboration by providing API, a development/operation cost of API and a security risk are required to be reduced.

The present invention has been made in consideration of such circumstances, and an object thereof is to provide an application collaboration method, a computer program, and an application collaboration system in which information sharing between applications is attained by using a blockchain system.

### [Means for Solving Problems]

An application collaboration method of one embodiment of the present disclosure, includes: storing, by an information terminal device, application account data for a user of a first application and a second application, and blockchain account data of the user in a blockchain system; transmitting a collaboration request of the first application and the second application to a first device providing the first application or to a second device providing the second application, in association with the blockchain account data; causing the first device to transmit a grant request of a token based on a usage record of the first application of the user that is associated with the application account data to the blockchain account data to the blockchain system, on the basis of the collaboration request; and causing the second device to acquire data of the presence or absence of the token granted to the blockchain account data, the amount of token, and content or a condition of the token.

### [Effects of Invention]

According to the present disclosure, it is possible to securely collaborate applications at a low cost by using a blockchain system without a development/operation cost of API.

### [Brief Description of Drawings]

FIG. 1 is a schematic view of a system of the present disclosure.
FIG. 2 is a sequence diagram illustrating fundament of application collaboration processing in the system.
FIG. 3 is a sequence diagram illustrating a procedure of application collaboration processing of an existing method of Comparative Example.
FIG. 4 is a block diagram illustrating a configuration of an information terminal device.
FIG. 5 is a block diagram illustrating a configuration of a management device.
FIG. 6 is a block diagram illustrating a configuration of a node in a blockchain system.
FIG. 7 is a sequence diagram illustrating an example of authentication processing procedure in application collaboration.
FIG. 8 is a sequence diagram illustrating an example of a procedure of processing of checking content of a token.
FIG. 9 is a sequence diagram illustrating an example of processing execution based on a ticket-type token.
FIG. 10 is a schematic view of a system in Example 1.
FIG. 11 is a sequence diagram illustrating an example of a procedure of collaboration between applications in Example 1.
FIG. 12 is a sequence diagram illustrating an example of the procedure of the collaboration between the applications in Example 1.
FIG. 13 is a schematic view illustrating a structure of a right token corresponding to the n-th order use-related right in Example 2.
FIG. 14 is a schematic view of a system in Example 2.
FIG. 15 is a sequence diagram illustrating an example of a procedure of collaboration between applications in Example 2.
FIG. 16 is a sequence diagram illustrating an example of the procedure of the collaboration between the applications in Example 2.

### [Mode for Carrying out Invention]

The present disclosure will be described in detail with reference to the drawings illustrating embodiments of the present disclosure.

In the present disclosure, a "blockchain system" indicates a system that includes a plurality of computers capable of performing communication connection to each other and a network for connecting the plurality of computers, and creates a blockchain by distributed processing of the plurality of computers. In the blockchain, a transaction to be requested is executed, and a result thereof is imported.

As an example of contents consumption in a secondary trade area, the play of a game that is primary contents is distributed on a video distribution platform. In video distribution of the game play, in particular, live distribution, consumption such as "viewing with other viewers" secondary contents such as a "game play video of another person" and a "distributor and a viewer having a talk on SNS" about the secondary contents is completed and established online. It is presumed that a viewing time of the distributed video reaches several hundreds of millions of hours/months in total on a plurality of main video distribution platforms, and in the secondary trade area of the primary contents such as a game, great excitement is actually shown.

For a provider making or operating the game that is the primary contents, the importance of an index relevant to such a secondary trade area, for example, the number of viewers for each game in the distribution relevant to the game increases. For example, in an online game with players in scale of several hundreds of millions of people, the index such as the number of viewers may be set as a key performance indicator (KPI), and then, an official partner program may be incorporated by centering on the live distribution, and the activation of the secondary trade area may be intentionally accelerated. The official partner program, for example, is a program in which an excellent distributor satisfying a certain condition is regarded as a partner, and online social activity is supported by various non-financial benefits.

However, a problem in the activation of the secondary trade area to be constructed across different applications such as the game itself, the distribution platform, and SNS is information collaboration between the applications. Even in the example of the distribution of the game play described above, there is crossing between an application of the "game" itself and an application for a video distribution platform. If video distribution activity relevant to a specific game is evaluated and some reverting (such as item granting) is desired to be performed with respect to a distributor when playing the game, it is necessary for the provider operating the game to associate an account of the distributor between the game and the video distribution platform.

In the case of performing application collaboration, in general, it is necessary for a side that provides user information including use history, a record, and the like associated with the account, according to the example described above, the video distribution platform side, to develop and operate API that can be accessed from a side that requests the information. In addition, it is necessary for such API to control the access to API after carrying out authentication/approval based on a suitable protocol (such as OAuth or open ID connect). Here, a development/operation cost or a security risk of API becomes an issue. In particular, if a large-scale leakage accident occurs in the user information such as an account, great damage is caused even in a large organization, and thus, it is necessary to avoid an increase in the security risk to a maximum extent.

The development/operation cost and the security risk are also imposed on the side that requests the user information and accesses API, according to the example described above, the provider operating the specific game. For example, as the security risk, for example, when based on an approval protocol such as OAuth, it is necessary for the side that requests the user information to store confidential information (an access token) for accessing the user information. In the storage of the confidential information, there is a risk that the leakage is considerable. The security risk and the development/operation cost according to the specification of API of the application to be collaborated increase enormously in proportion to the number of applications to be collaborated.

In consideration of such circumstances, in the activation of the secondary trade area of the contents to be constructed across the applications, a low-cost and secure method of sharing the user information (mainly an activity record that contributes to the activation of the secondary trade area, or the like) is required.

An application collaboration method of the present disclosure, includes: storing, by an information terminal device, application account data for a user of a first application and a second application, and blockchain account data of the user in a blockchain system; transmitting a collaboration request of the first application and the second application to a first device providing the first application or to a second device providing the second application, in association with the blockchain account data; causing the first device to transmit a grant request of a token based on a usage record of the first application of the user that is associated with the application account data to the blockchain account data to the blockchain system, on the basis of the collaboration request; and causing the second device to acquire data of the presence or absence of the token granted to the blockchain account data, the amount of token, and content or a condition of the token.

In the application collaboration method of the present disclosure, a publishable digital asset is tokenized and shared between different applications. The digital asset is a record, a right, or the like associated with each application program, and is different from a crypto-asset such as BTC or ETH. It can be checked that an asset of a user, such as a usage record, in one application is recorded in a blockchain system, in the other application, and thus, a user relevant to the other application is capable of executing the right.

Since data recorded in the blockchain system has high falsification resistance in terms of data structure, it is extremely difficult to perform an illicit manipulation with respect to the recorded data (such as right granting). Therefore, extremely secure sharing can be attained. Since the development/operation cost of API is not required, the cost can also be reduced.

Hereinafter, such an application collaboration method will be described in detail.

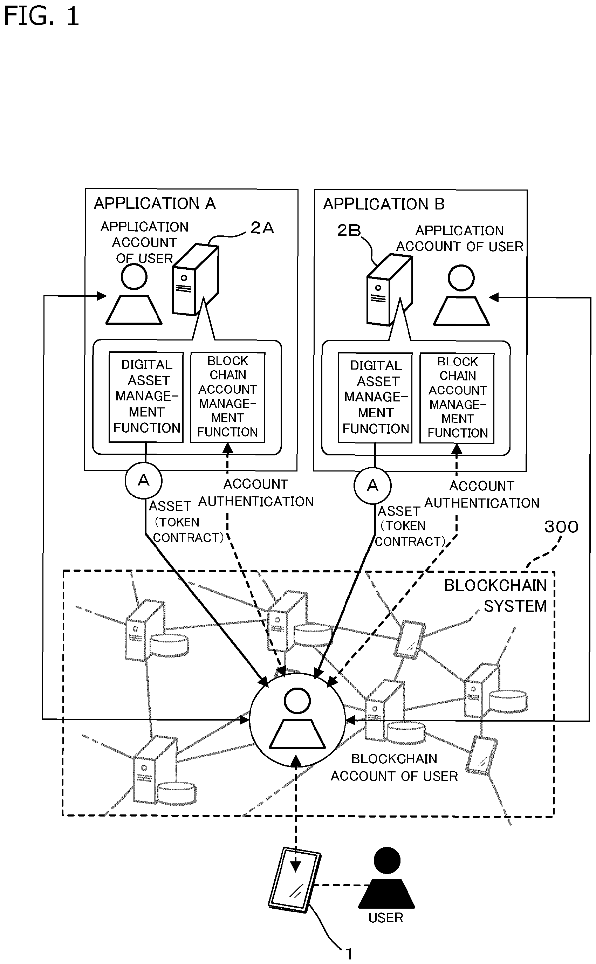

FIG. 1 is a schematic view of a system 100 of this embodiment. The system 100 includes an information terminal device 1 of a first user outside a blockchain system 300, and management devices 2A and 2B of each of different applications A and B. In the following embodiment, collaboration between two applications will be described as an example, but the same applies to collaboration between three or more applications.

The management device 2A is capable of communicating with an instance based on a program for the application A on the information terminal device 1 in a client-server relationship, through a network N outside the blockchain system 300. Similarly, the management device 2B is capable of communicating with an instance based on a program for the application B on the information terminal device 1. Note that, the management devices 2A and 2B may be attained by the instance on the information terminal device 1 of each of applications A and B.

In the system 100 of this embodiment, the user holds an account (hereinafter, referred to as an application account) such that the information terminal device 1 is capable of signing in (logging in) both of the application A and the application B. In the information terminal device 1, sign-in data of each of the applications A and B is stored in advance or by an input operation of the user.

In addition, the information terminal device 1 stores account data in the blockchain system 300 (hereinafter, referred to as a blockchain account), and is capable of accessing the blockchain system 300. In the present disclosure, the "blockchain system" indicates a system that includes a plurality of computers capable of performing communication connection to each other and a network for connecting the plurality of computers, and creates a blockchain by distributed processing of the plurality of computers.

The management devices 2A and 2B hold the blockchain account, and is capable of broadcasting a transaction to the blockchain system 300 and of browsing data in a block imported into the blockchain system 300.

In the system 100 of this embodiment, the blockchain system 300 is utilized as a digital asset management platform, and the publishable activity record of the user is regarded as the digital asset, and can be tokenized and shared between the different applications A and B that are used by the user. Here, the digital asset is a record or a right associated with the application, and is different from the crypto-asset.

The digital asset corresponding to the activity record or the right is implemented as a smart contract in the blockchain system 300, and has been deployed in accordance with the execution/use of the applications A and B of the user. A token holding status in the blockchain system 300 is managed by the smart contract of the digital asset. Hereinafter, the smart contract corresponding to the digital asset will be referred to as a token contract.

In the system 100, each of the management devices 2A and 2B has an account management function of executing the authentication of the blockchain account of the user and a digital asset management function of tokenizing the record in the applications A and B as the digital asset.

In the account management function, if account collaboration is requested from the information terminal device 1 of the user, each of the management devices 2A and 2B of each of the applications A and B executes processing of authenticating the presence of the blockchain account of the user.

The function of holding the blockchain account (including a private key described below) in the management devices 2A and 2B, the function of broadcasting the transaction to the blockchain system 300, and the function of browsing the data in the block imported into the blockchain system 300 may be implemented separate from the applications provided by the management devices 2A and 2B. The function relevant to the blockchain system 300 (the account management function and the digital asset management function) may be provided as SaaS and PaaS to be implemented between the management devices 2A and 2B and the blockchain system 300. In addition, such functions can be used by the user through the application to be operated on the information terminal device 1.

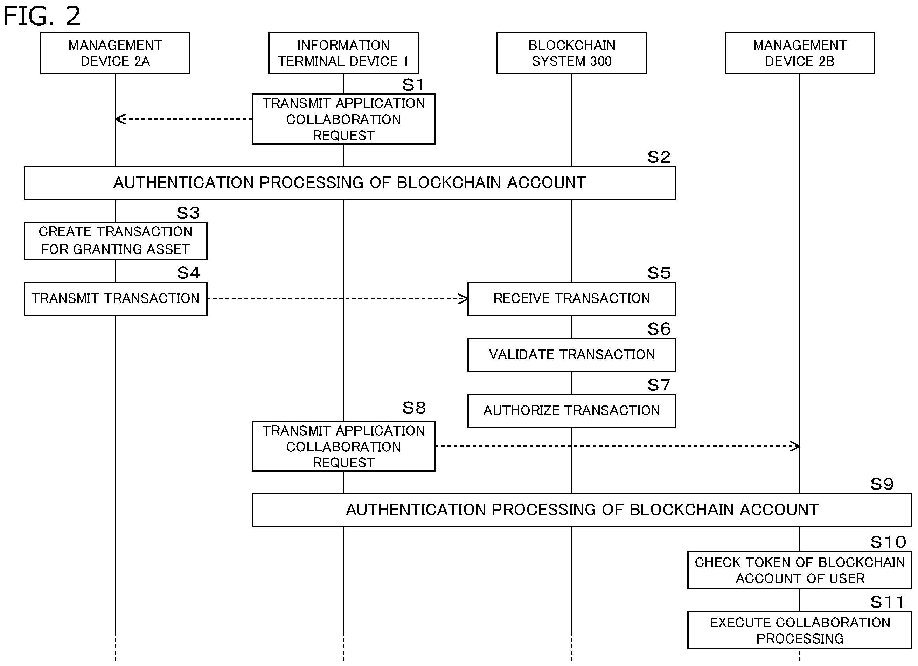

FIG. 2 is a sequence diagram illustrating the fundament of application collaboration processing in the system 100.

In the system 100, an application collaboration request including account data of the application A is transmitted to the management device 2A from the information terminal device 1 of the user through a program for one application A (step S1).

Authentication processing of the blockchain account of the user is executed between the information terminal device 1, the management device 2A, and the blockchain system 300 (step S2).

The management device 2A sets the publishable activity record (excluding the crypto-asset) in the application A that is associated with the account data of the user as the digital asset, and creates a transaction for granting the asset to the blockchain account of the user, on the basis of the digital asset management function (step S3). The management device 2A broadcasts the created transaction to the blockchain system 300 (step S4).

In the blockchain system 300, if the transaction is received from the management device A (step S5), the transaction is validated (step S6), and authorized (step S7). In step S7, the token contract of the user updates the token holding status.

The information terminal device 1 of the user transmits an application collaboration request including account data of the application B to the management device 2B through a program for the application B that is a collaboration target (step S8).

Authentication processing of the blockchain account of the user is executed between the information terminal device 1, the management device 2B, and the blockchain system 300 (step S9).

The management device 2B checks the content of the token associated with the blockchain account of the user (step S10), and executes the collaboration processing based on the content checked in step S10 with respect to the application account of the user (step S11). The digital asset in the block imported into the blockchain system 300 can be checked from the different applications A and B. Therefore, the record in the application A can be tokenized and reverted to the original in the application B.

According to such a procedure, if the authentication function and the management function based on the blockchain account of the user are implemented, it is not necessary for a provider operating the applications A and B to operate API for collaboration with other applications. Since the token is checked in the blockchain system 300, and thus, the check can also be securely implemented.

In the procedure of the processing illustrated in sequence diagram of FIG. 2, when the information terminal device 1 that is used by the user accepts the operation of the user, the application collaboration request is transmitted to the management device 2A. However, the present disclosure is not limited thereto, and the collaboration request may be transmitted at an arbitrary timing, or may be started during the processing of the applications A and B. When the request is transmitted to the management device 2B, a request for starting the collaboration may be transmitted to the application A.

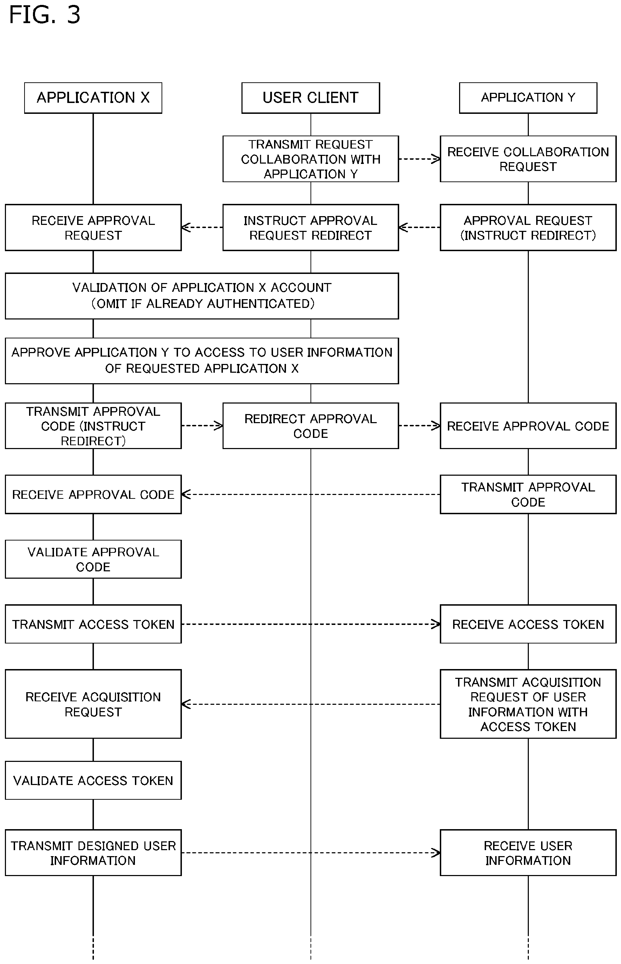

FIG. 3 is a sequence diagram illustrating a procedure of application collaboration processing of the existing method of Comparative Example. The sequence diagram of FIG. 3 illustrates the processing of "OAuth 2.0 Authorization Code Grant". In the existing method, as illustrated in the sequence diagram of FIG. 3, when the collaboration request is transmitted, a client used by the user redirects the transmission and reception of an approval request and an approval code between the applications X and Y. After the approval code is transmitted to the application Y that is a collaboration target, the application X transmits the access token to the application Y through the validation of the approval code, and transmits an acquisition request of the user information in the application X from the application Y, and thus, the user information is transmitted to the application Y from the application X.

As illustrated in FIG. 3, in the existing method, it is necessary to exchange the access token (the confidential information) after authentication/approval in a suitable protocol is carried out. Since it is necessary for the application Y to store the access token, not only is the provider of the application Y required to face the leakage risk but also the risk or the development cost collaboration processing increases in proportion to the number of applications to be collaborated. In addition, as illustrated in FIG. 3, the application X side has the development/operation cost of API for providing the user information and the leakage risk of the user information, which also increase in accordance with the number of applications to be collaborated. In order to accelerate the collaboration, it is necessary to avoid an increase in the risk or the cost. In addition, as illustrated in FIG. 3, on the application X side, the development/operation cost of API for providing the user information increases in accordance with the number of applications to be collaborated. In order to accelerate the collaboration, it is necessary to avoid an increase in the cost.

Hereinafter, as illustrated in FIG. 3, a specific configuration of a system for attaining collaboration between applications without using API and the access token will be described.

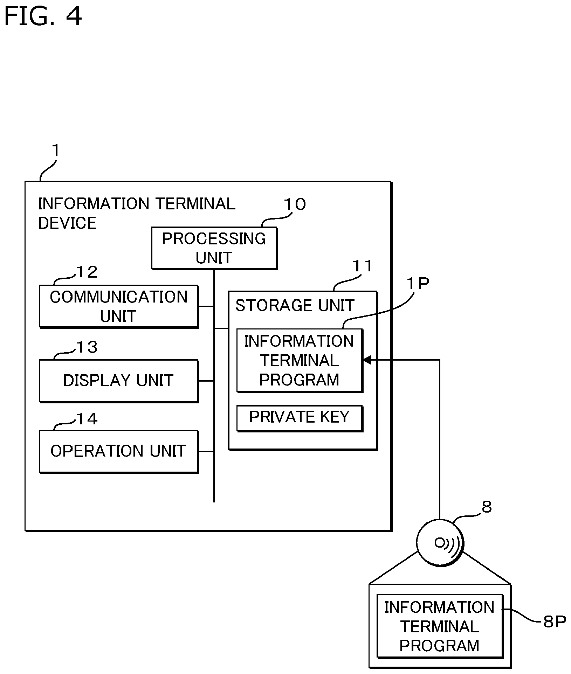

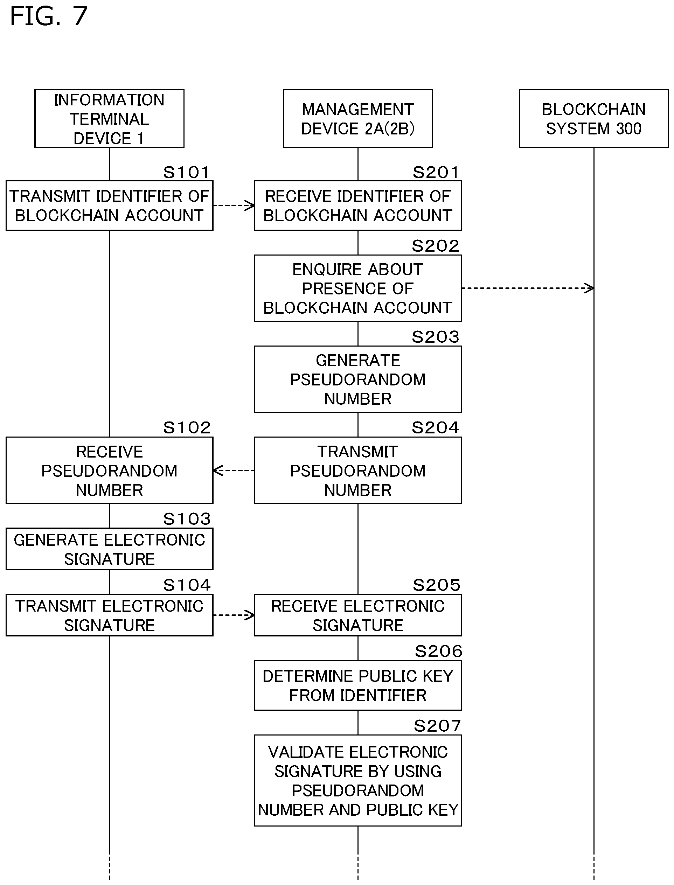

FIG. 4 is a block diagram illustrating the configuration of the information terminal device 1. The information terminal device 1, for example, is a smart phone or a tablet terminal. The information terminal device 1 may be a personal computer. The mode of the information terminal device 1 is not limited insofar as the information terminal device 1 is a device that is capable of performing electronic signature processing using a private key described below (FIG. 7) and data communication between the management devices 2A and 2B executing the authentication. The information terminal device 1 may be attained by combining a device (a hardware wallet) specially executing private key management and the electronic signature processing and a smart phone or a personal computer.

The information terminal device 1 includes a processing unit 10, a storage unit 11, a communication unit 12, a display unit 13, and an operation unit 14. As the processing unit 10, a processor such as a central processing unit (CPU) and a graphics processing unit (GPU), a memory, or the like is used. Note that, the processing unit 10 may be configured as one hardware (System On a Chip: SoC) in which the processor, the memory, the storage unit 11, and the communication unit 12 are integrated.

As the storage unit 11, a flash memory is used, and a program and data referred to by the processing unit 10, such as an information terminal program 1P, are stored in the storage unit 11. The information terminal program 1P is a program for allowing a computer to function as the information terminal device 1 of the system 100 of the present disclosure. In the storage unit 11, the blockchain account is stored. In addition, the application account of each of the applications including the different applications A and B is stored in the storage unit 11, and it is possible to sign in the application by using the account data.

As the information terminal program 1P that is stored in the storage unit 11, an information terminal program 8P stored in a storage medium 8 that is readable from the computer may be read out by the processing unit 10 and stored in the storage unit 11.

In the storage unit 11, as illustrated in FIG. 4, a private key of the user in the blockchain system 300 may be stored. The private key may be stored not to be rewritable in the memory of the processing unit 10 or the storage unit 11 (the chipping of a wallet). The private key may be managed by the hardware wallet specialized in the private key as described above.

The communication unit 12 is a communication module attaining communication connection to the management devices 2A and 2B and other communication devices. As the communication unit 12, a network card, a wireless communication device, or a carrier communication module is used. As the communication unit 12, a module attaining communication by near field communication with the communication unit 22 of the management devices 2A and 2B may be used.

As the display unit 13, a display device such as a liquid crystal panel or an organic EL display is used. The operation unit 14 is an interface accepting the operation of the user, and a physical button, a touch panel device with a built-in display, a speaker, a microphone, and the like are used as the operation unit 14. The operation unit 14 may accept the operation on a screen that is displayed by the display unit 13 in the physical button or the touch panel, or may accept the operation in an interactive format with a voice output from the speaker by recognizing operation content from an input voice of the microphone.

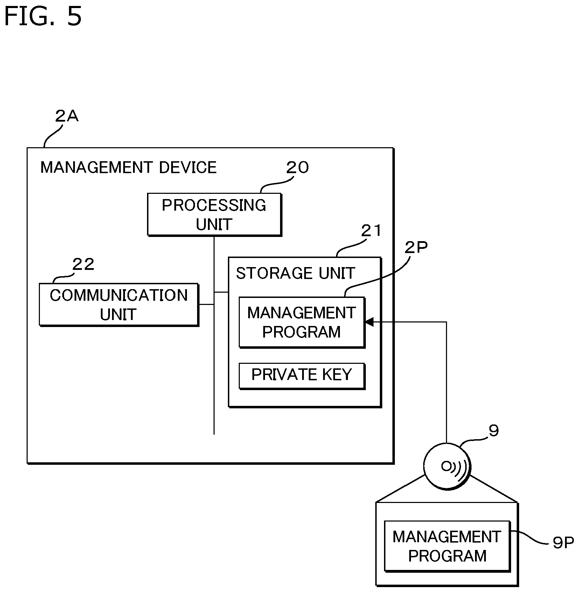

FIG. 5 is a block diagram illustrating the configuration of the management devices 2A and 2B. The management devices 2A and 2B may be a server computer, may be a desktop type or laptop type personal computer, or may be a communication terminal such as a smart phone or a tablet terminal. The management devices 2A and 2B are not limited to a device capable of performing long-distance communication through a network such as the so-called internet, and may be a device performing data communication by near field communication with the information terminal device 1.

Each of the management devices 2A and 2B includes a processing unit 20, a storage unit 21, and a communication unit 22. In FIG. 5, only the management device 2A is illustrated. Since the configuration of the management device 2B is the same as that of the management device 2A, the detailed description will be omitted.

As the processing unit 20, a processor such as CPU and GPU, a memory, or the like is used. The processing unit 20 attains an authentication function and an asset management function in the blockchain system 300 including the creation of the transaction and the execution of the transaction, on the basis of a management program 2P that is stored in the storage unit 21. As the storage unit 21, a hard disk or a flash memory is used, and a program and data referred to by the processing unit 20, such as the management program 2P, are stored in the storage unit 21.

As the management program 2P that is stored in the storage unit 21, a management program 9P stored in a storage medium 9 that is readable from the computer may be read out by the processing unit 20 and stored in the storage unit 21.

The communication unit 22 is a communication module attaining communication connection to the information terminal device 1 or the blockchain system 300. As the communication unit 22, a network card, a wireless communication device, or a carrier communication module is used. As the communication unit 22, a module attaining communication by near field communication with the communication unit 12 of the information terminal device 1 may be used.

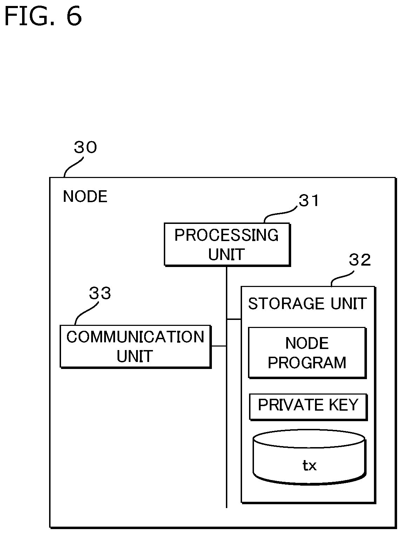

FIG. 6 is a block diagram illustrating the configuration of a node 30 in the blockchain system 300. The node 30 may be a server computer, may be a desktop type or laptop type personal computer, or may be a communication terminal device such as a smart phone. The node 30 includes a processing unit 31, a storage unit 32, and a communication unit 33. In addition, if the node 30 is a device including at least the processing unit 31 and the communication unit 33, a part of the node or the entire node can be configured by a part of the processing unit 31.

As the processing unit 31, a processor such as CPU and GPU, a memory, or the like is used. The processing unit 31 may be configured as one hardware in which the processor, the memory, the storage unit 32, and the communication unit 33 are integrated. In the memory of the processing unit 31, the private key that is possessed by each of the nodes 3 may be stored. Then, the processing unit 31 executes each processing based on a node program that is stored in the storage unit 32, and allows a general-purpose computer to function as the node in the blockchain system 300.

As the storage unit 32, a hard disk or a flash memory is used, and a program and data referred to by the processing unit 31, such as the node program, are stored in the storage unit 32. The storage unit 32 stores the blockchain. The node program includes a program for allowing the computer to function as the smart contract described below (the processing unit 31 executing predetermined calculation processing with respect to the transaction). The private key described above may be stored in the storage unit 32. The storage unit 32 may store a public key and an address based on the private key.

The communication unit 33 is a communication module attaining intercommunication of the node 30. As the communication unit 33, a network card, an optical communication device, a wireless communication device, or the like is used.

The details of the application collaboration in the system 100 to be configured as described above will be described with reference to a sequence diagram.

Before the basic processing, the user holds the digital asset in accordance with the activity record or the like in the applications A and B. The information terminal device 1 of the user stores the blockchain account for managing the digital asset. Since one or more asymmetric key pairs are associated with the general blockchain account, in step S2 of the basic processing, each of the management devices 2A and 2B of each of the applications A and B is capable of performing the authentication of the user (whether or not the owner actually has the blockchain account) by utilizing the asymmetric key pairs.

Hereinafter, challenge-response authentication utilizing the asymmetric key will be described. FIG. 7 is a sequence diagram illustrating an example of a procedure of authentication processing in the application collaboration. The procedure illustrated in the sequence diagram of FIG. 7 corresponds to the details of "account authentication processing" in the processing illustrated in the sequence diagram of FIG. 2.

The processing unit 10 of the information terminal device 1 transmits an identifier of the blockchain account to the management devices 2A and 2B in accordance with an account collaboration request (S1) (S101).

If the identifier of the blockchain account is received by the communication unit 22 (step S201), the processing unit 20 of the management device 2A (or 2B) enquires the blockchain system 300 about the presence of the blockchain account (step S202).

In step S202, the processing unit 20 may determine whether or not the identifier received in step S201 is present as the account of the blockchain system 300 and holds some tokens. In step S202, the processing unit 20 acquires the public key itself associated with the identifier of the blockchain account transmitted from the information terminal device 1, or information required for calculation thereof from the blockchain system 300.

The processing unit 20 of the management device 2A (or 2B) generates a pseudorandom number (step S203), and transmits the created pseudorandom number to the information terminal device 1 that is a collaboration request source (step S204).

The processing unit 10 of the information terminal device 1 receives the pseudorandom number from the management device 2A (or 2B) (step S102), and generates an electronic signature with respect to the received pseudorandom number by the private key associated with the blockchain account of the user (step S103). The processing unit 10 transmits the generated electronic signature to the management device 2A (or 2B) that has transmitted the pseudorandom number (step S104).

The processing unit 20 of the management device 2A (or 2B) receives the electronic signature (step S205), and determines the public key from the identifier received in step S201 (step S206). In step S206, in the case of acquiring the public key itself, the processing unit 20 reads out the public key, and in the case of acquiring the information required for the calculation, the processing unit 20 calculates the public key.

The processing unit 20 validates the validity of the electronic signature in step S205 by using the pseudorandom number generated in step S203 and the public key determined in step S206 (step S207). In step S207, if it can be derived that the electronic signature is valid, the management device 2A (or 2B) determines that it succeeds in the authentication of the blockchain account of the user of the information terminal device 1 that is a transmission source of the collaboration request.

In step S3 (refer to FIG. 2) of the basic processing, if it succeeds in the authentication, the management device 2A or the management device 2B grants a token relevant to the application A or the application B to the user requiring the application collaboration.

The properties of the token to be granted, and a token grant condition or process are not particularly limited. The pattern of the token to be granted is as follows.

As the properties of the token, the following three axes can be broadly considered.

### [Fungibility]

The token may be fungible (Fungible Token: FT), or non-fungible (Non-Fungible Token: NFT).

### [Transferability]

The token to be granted may be transferable, or may be non-transferable.

### [Burnability]

The token to be granted may be burnable in the blockchain system 300, or may be non-burnable.

If the token can be burned, the burning may be performed by a minter of the token (the management devices 2A and 2B), or may be performed by the user holding the token (may be performed by satisfying a certain condition).

The "burning" may be expressed by reducing the amount of token, or may be expressed with metadata such as a burning flag.

The basic properties of the token may be defined by the combination of choices in the three axes described above. For example, a token corresponding to some records (such as achievements and performances) in the application A is not transferable to others and is unique to the user who is a holder. It is desirable that the token can be semipermanently used. Therefore, it is appropriate that the token is attained by the combination of non-transferability, non-fungibility, and non-burnability. In the case of a non-fungible token, a unit token can be identified by data such as identification information unique to the token and a unique image to be created by the application A. In the case of a fungible token, since there is the concept of amount, an upper limit may be set on a token mint-able amount or a holdable amount of each of the blockchain accounts, a transferable amount, a burnable amount, and the like. In addition, the metadata (for example, data with comparatively high capacity, such as an image of a record asset and the detailed description, or the like) relevant to the token may be held in the blockchain system 300, or may be held outside the blockchain system 300. If the metadata is held outside the blockchain system 300, for example, a method of publishing the metadata with specific link information (URL), for example, in a JSON format and of recording the link information in association with the token in the blockchain system 300 can be considered.

As described above, the token may be implemented as the token contract. In this case, in the case of a non-transferable and non-fungible token, the deployed token contract, for example, may set the call of the transferal to be disabled. On the contrary, in the case of a transferable token, the transferal can be called, and the deployment may be performed in a state where the amount can be designated.

The token grant condition can be set in association with the concept and the index in each of the applications A and B.

A token granting (S3) process, for example, may be attained by transferring the token that is minted in advance by the management device 2A of the application A and is held in the blockchain account held (manageable) by the management device 2A to the blockchain account of the user. Alternatively, the management device 2A may directly mint the token to the blockchain account of the user. Such transferring or minting may be performed by the management device 2A at an arbitrary timing, or may be executed at a timing when there is a token grant request including the application collaboration of the user satisfying the grant condition.

In step S10 (refer to FIG. 2) of the basic processing, the processing unit 20 of the management device 2B that is a collaboration destination checks the content of the token associated with the blockchain account of the user. If the blockchain account has been authenticated, such check processing may basically be done by referring to token information held in the blockchain account of the user on the blockchain system 300 at an arbitrary timing. A token check timing may be an arbitrary timing, and the following three patterns can be considered as the token check timing.
(1) A timing when the request is received from the information terminal device 1 (the user)
(2) A timing when the application B requires reference
(3) A timing when the token is granted to the user

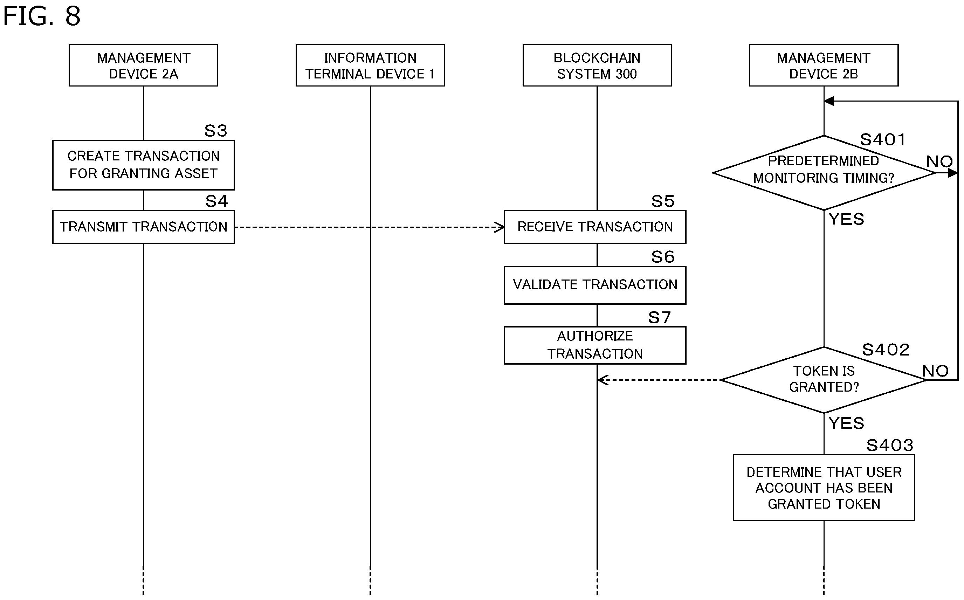

The timing of (3) will be described with reference to a sequence diagram. FIG. 8 is a sequence diagram illustrating an example of a procedure of processing of checking the content of the token. A subject to be checked is the management device 2B of the application B. The processing in the sequence diagram of FIG. 8 is carried out in a state where the processing to step S9 in the basic processing of FIG. 2, that is, the authentication processing of the blockchain account is completed in both of the management device 2A and the management device 2B to be collaborated.

The processing unit 20 of the management device 2B determines whether or not it is a predetermined monitoring timing (step S401). If it is determined that it is not the monitoring timing (S401: NO), the processing unit 20 returns the processing to step S401, and waits until it is determined that it is the timing. The predetermined monitoring timing, for example, is a certain cycle time. Other events may determine that it is the monitoring timing.

If it is determined that it is the predetermined monitoring timing (S401: YES), it is determined whether or not the token is granted to the blockchain account of the user on the blockchain system 300 by the management device 2A of the application A (step S402). If it is determined that the token is granted (S402: YES), it is determined that the check can be performed (step S403).

If it is determined that the token is not granted in step S402 (S402: NO), the processing unit 20 returns the processing to step S401.

As illustrated in basic processing of FIG. 2, the transaction of the asset granting is approved by steps S3 to S7 while continuously repeating step S401, and if the asset is imported into the block of the blockchain system 300, it is determined that the token is granted in step S402, and the token granting can be detected.

In this case, if the token is granted to the user by the management device 2A of the application A, such granting can be immediately grasped by the management device 2B of the application B by suitably setting a monitoring timing.

It is originally difficult for the smart contract (the token contract) that is operated on the blockchain system 300 to directly access a device outside the blockchain system 300. It is difficult for the node 3 or the like in the blockchain system 300 to notify the management device 2B of the application B of the token granting as a subject. Accordingly, if it is necessary to grasp information update on the blockchain system 300 in real time to a maximum extent, as illustrated in FIG. 8, the update of the data relevant to the blockchain account to be a target or a target token can be continuously monitored.

As described above, the token to be granted in this embodiment is the record or the right to be minted in association with the application, and is different from the crypto-asset such as so-called BTC or ETH. Therefore, the management device 2A of the application A to be a minting source of the token or the provider managing the application A affects the value of the token. In such a case, in the check process, it is important not only that the token is held but also that the minting source can be checked.

The transaction of the blockchain is basically approved (authorized) after the electronic signature generated on the basis of the private key associated with the blockchain account that executes the transaction is validated. For this reason, the blockchain account executing the transaction for minting the token can be cryptographically validated. That is, if the application A of the minting source of the token or the provider managing the application A publishes the public key (a blockchain account address and data capable of calculating the public key) corresponding to the private key used for minting the token, the application B that is the collaboration destination or the provider managing the application B is capable of accurately executing the check of the minting source of the token. The check may be carried out in the format of enabling the validation of the minting source. There is a case where the provider of the application B is not capable of approving the transaction only by checking the granting of the token with respect to the blockchain account of the user. Since the token is associated with the blockchain account, it is possible to validate whether or not the token is validly granted by the provider of the application A, and thus, the validation of the minting source can also be carried out as described above.

In step S11 (refer to FIG. 2) of the basic processing, some processing is approved by the management device 2B of the application B that is the collaboration destination, on the basis of the right associated with the checked token. The right associated with the token is broadly divided into the following two patterns.
(1) A pattern (a membership type) in which the right can be permanently executed
(2) A pattern (a ticket type) in which the right is lost as the right is executed a certain number of times

In the membership type of (1), insofar as the authentication processing of steps S2 and S9, and the token check processing of step S10 are executed, the right can be executed thereafter. In the ticket type of (2), it is necessary to store data for whether or not the right can be executed by recording the number of times that the right can be executed in the management device 2B in some formats or the number of times that the right is executed. For example, the number of times that the right can be executed may be stored as the amount of held tokens in a storage device inside or outside the management device 2B, and the number of times may be reduced each time when the right is executed in the application B. If a part of the token or the entire token that is the source of the execution of the right is burned each time when the right is executed, the remaining number of times that the right can be executed can be reliably managed on the blockchain system 300.

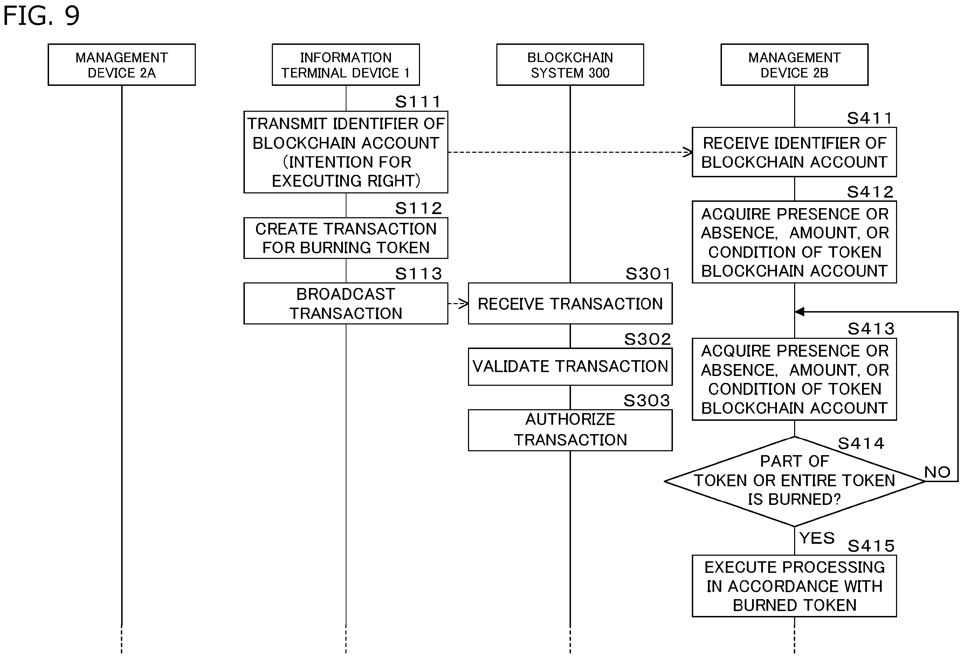

FIG. 9 is a sequence diagram illustrating an example of the execution of processing based on the ticket-type token. The following processing is executed in accordance with a request from the information terminal device 1 of the user who desires the processing in the application B based on the token that is granted on the basis of the record in the application A.

The processing unit 10 of the information terminal device 1 transmits the identifier of the blockchain account of the user to the management device 2B of the application B, on the basis of the operation of the user in the operation unit 14 (an intention for executing the right) (step Sill).

The processing unit 20 of the management device 2B receives the identifier of the blockchain account of the user (step S411), the presence or absence, the amount, or the condition of the token that is associated with the received identifier is checked (acquired) (step S412).

The processing unit 10 of the information terminal device 1 creates a transaction for burning the token granted from the application A by the amount according to desired execution of the right (step S112).

The processing unit 10 broadcasts (transmits) the transaction created in step S112 to the blockchain system 300 (step S113).

In the blockchain system 300, the transaction broadcasted in step S113 is received (step S301). The blockchain system 300 validates the received transaction by the blockchain account of the user (step S302), and authorizes the transaction (step S303).

The transaction is imported into the block by the authorization of step S303, the token from the application A that is associated with the blockchain account of the user is burned by the amount designated in step S112.

The processing unit 20 of the management device 2B checks (acquires) the presence or absence, the amount, or the condition of the token that is associated with the identifier received in step S411 after a predetermined time has elapsed from step S412 or in accordance with the notification from the information terminal device 1 (step S413).

The processing unit 20 determines whether or not a part of the token or the entire token is burned by comparing the presence or absence, the amount, or the condition of the token, which is acquired in step S413 with the presence or absence, the amount, or the condition of the token, which is acquired in step S413 (step S414).

If it is determined that the token is not burned (not changed) (S414: NO), the processing unit 20 returns the processing to step S413, and performs the check again when a predetermined time has elapsed or there is a notification event from the information terminal device 1.

If it is determined that the token is burned (changed) (S414: YES), the processing unit 20 executes the processing to be a benefit for the user in the application B in accordance with the request, and the content, the amount, or the condition of the burned token (step S415), and ends the processing.

According to the processing illustrated in sequence diagram of FIG. 9, the token based on the record in the application A that is granted to the user is burned, and a benefit that compensates for the burned token is granted to the user, as with a ticket.

The execution of the ticket-type right as illustrated in the sequence diagram of FIG. 9 is basically carried out while communicating with each other by the information terminal device 1 used by the user who is the subject of the execution of the right and the management devices 2A and 2B checking the execution of the right. It is obvious that the execution of the right is not limited to the execution of the right that is carried out through long-distance communication including the so-called internet, such as communication between the information terminal device 1 and the management devices 2A and 2B. As a specific application example of the management devices 2A and 2B, for example, a device performing the execution of a settlement-related right that is conjunct with a POS register, a device performing the execution (unlocking) of the right in conjunction with a smart locking device, a device performing the execution of the right (door unlocking or engine start-up) in conjunction with a connected car, and the like are considered. The execution of the right may be carried out through the near field communication of such devices. In addition, the execution of the ticket-type right has excellent compatibility with a trial-type right (such as a right to browse pay-to-play media or contents to be provided by a community for a limited time or the limited number of times), and spread according to a flow can be expected if the token is transferable, and thus, the execution of the right may be carried out in combination with marketing measures or the like.

Note that, the execution of the right is performed by the communication of the digitalized information between the information terminal device 1 and the management devices 2A and 2B, but it is not necessary that the range of the right to be executed as a result thereof is digital-completed. For example, in the case of an environment (such as a smart city) in which internet of things (IoT) is a highly developed, a right to provide a personalized service through facilities or mobility in the environment may be minted as the token. For example, the right may be a preferential right to use facilities or building services to be provided in the facilities (such as an elevator, an air-conditioner, an illuminator, an internet connection device), and mobility (such as a taxi and a bus). In addition, if the facility is a store, stock management considering the right of a specific customer may be performed.

The application collaboration described above will be described in detail with reference to a plurality of Examples.

### [Example 1]

In Example 1, the application collaboration will be described with the utilization in a campaign or a royalty program considering the record in the secondary trade area as an example. In digital contents business, the utilization of the secondary trade area is an important issue. Therefore, in order to solve such an issue, not only the activity (in the case of a game, activity completed in the game) in the primary trade area but also the activity (game play video distribution) in the secondary trade area is evaluated, and a campaign or a royalty granting program performing revert to the activity can be constructed.

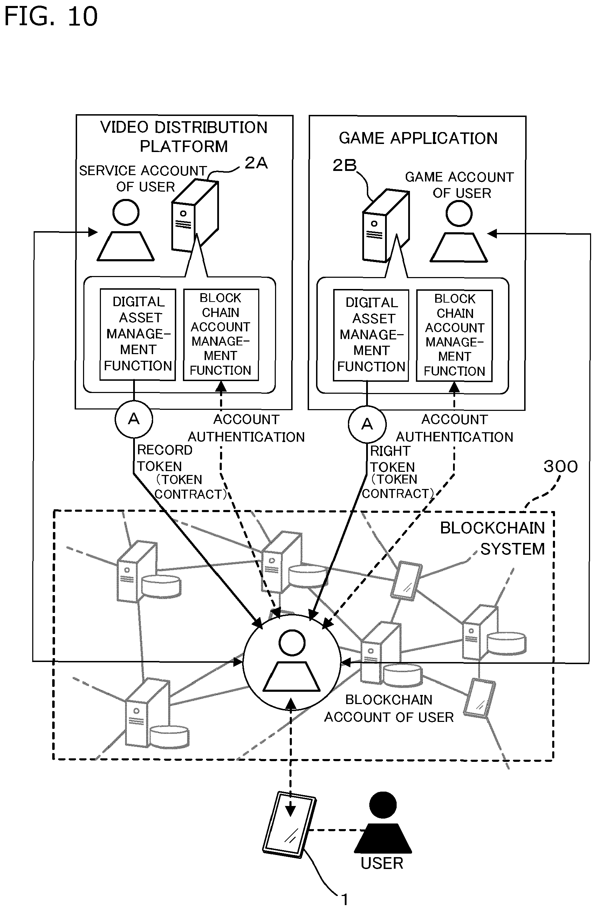

FIG. 10 is a schematic view of the system 100 in Example 1. In Example 1, the application A is a video distribution platform (an application), and the application B is an application relevant to a service to be provided by a game provider in a primary trade area. FIG. 10 corresponds to the outline of the system 100 illustrated in FIG. 1, and the applications A and B are the video distribution platform and the game, respectively.

In the game play video distribution, the activity of the user on the video distribution platform corresponds to the activity in the secondary trade area, and thus, the record of the activity in the video distribution platform is tokenized such that the provider operating the game is capable of referring to the token, and therefore, a system granting a campaign or royalty can be constructed.

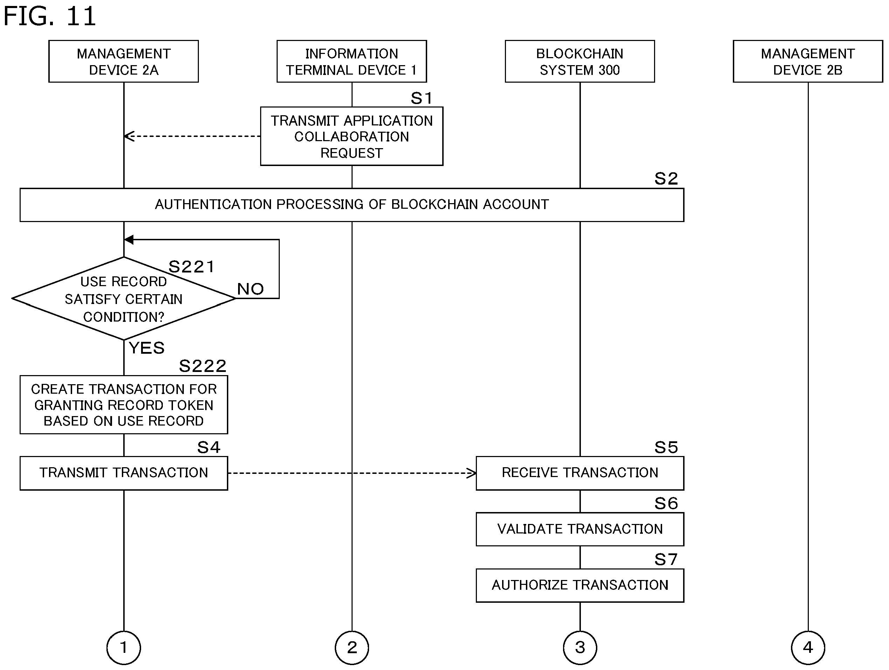

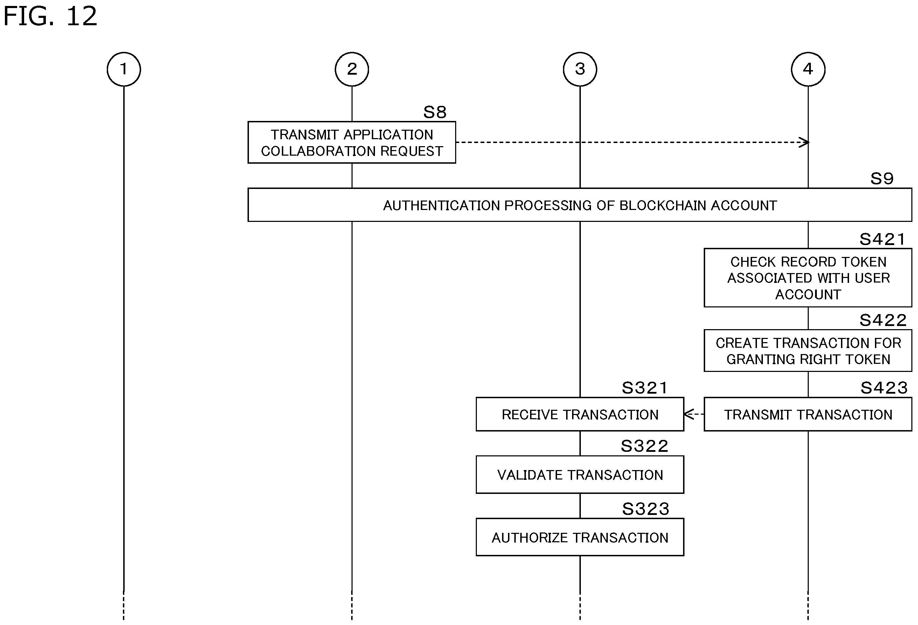

FIG. 11 and FIG. 12 are sequence diagrams illustrating an example of a procedure of the collaboration between the applications in Example 1. In the sequence diagrams of FIG. 11 and FIG. 12, the collaboration between the game and the video distribution platform is illustrated. In the procedure of the processing illustrated in the sequence diagrams of FIG. 11 and FIG. 12, the same reference numerals will be applied to the procedure that is not changed from the processing illustrated in the procedure of the basic processing in FIG. 2, and the detailed description will be omitted.

If the application collaboration request is transmitted from the information terminal device 1 (S1), the authentication processing is executed between the management device 2A providing the video distribution platform, the information terminal device 1, and the blockchain system 300 (S2).

In a state where the authentication processing is completed, the processing unit 20 of the management device 2A determines whether or not the usage record of the video distribution platform of the user satisfies a certain condition, on the basis of the application account (a service account) of the user included in the collaboration request (step S221).

If it is determined that the certain condition is not satisfied (S221: NO), the processing unit 20 returns the processing to step S221, and waits until the condition is satisfied. If it is determined that the certain condition is not satisfied (S221: NO), the information terminal device 1 may be notified that the collaboration condition is not satisfied, and the processing may be ended.

In step S221, the processing unit 20 may determine whether or not the certain condition is satisfied with respect to the number of hours of the video distribution, the number of views of the video distribution, the number of viewers of the video distribution, the number of viewers in live distribution, the number of comments, and the like. In addition, the processing unit 20 may determine whether or not the certain condition is satisfied, on the basis of the number of hours for viewing the video, the number of times for viewing the video, and the sum of money of "social tipping" with respect to the video. The certain condition may be stored in advance in the storage unit 21, and may be rewritable by a manager. The certain condition may include that a game application is included in the distributed video, and a game application is included in the viewed video.

If it is determined that the certain condition is satisfied (S221: YES), the processing unit 20 creates a transaction for granting the asset (the record) as a record token to the blockchain account received in steps S1 and S2, on the basis of the usage record of the video distribution platform (step S222). The processing unit 20 broadcasts the created transaction (S4).

The broadcasted transaction is received by the blockchain system 300 (S5), validated (S6), and authorized (S7).

The processing unit 10 of the information terminal device 1 transmits the application collaboration request to the management device 2B of the game application (S8). Accordingly, the authentication processing is executed between the management device 2B, the information terminal device 1, and the blockchain system 300 (S9).

In a state where the authentication processing is completed with respect to the blockchain account of the user, the processing unit 20 of the management device 2B checks the record token associated with the blockchain account (S421). If the record token is not capable of being checked in step S421, the collaboration processing is paused at this time point. In this case, the information terminal device 1 may be notified that the collaboration fails.

By checking the content, the processing unit 20 of the management device 2B of the game application in Example 1 creates a transaction for the blockchain account of the user to grant the right token of the right that can be executed later in the game application or in the video distribution platform being the collaboration destination (step S422).

The processing unit 20 of the management device 2B broadcasts (transmits) the transaction created in step S422 to the blockchain system 300 (step S423).

The transaction transmitted in step S423 is received by the blockchain system 300 (step S321), validated (step S322), and authorized (step S323).

Accordingly, the user is capable of obtaining the right token that can be used later from the game application, on the basis of the usage record in the video distribution platform. At this time, API is not used, it is sufficient that the transaction is received, validated, and authorized in the blockchain system 300 (the asset is implemented as the token contract), and a large-scale process is not required.

The right token may be a right that not only is reverted to the user to be executable in the game application, but also can be used in an application other than the game application including the video distribution platform. For example, the right may be a right to receive a certain discount in an electronic business transaction site selling goods relevant to the game application. Alternatively, the right may be a right to participate in a β-test of another game application (may be a sequel) to be provided from the same provider relevant to the game application. Alternatively, the right may be a right to participate in a community (a group chat and a salon) relevant to the game application. Alternatively, the right may be a right to enter a specific facility (may be substantial or virtual) relevant to the game application.

The provider providing the game application is capable of constructing a granting system of the campaign or the royalty for activating the secondary trade area of the game by freely combining the record and the right. It is obvious that the record or the right relevant to the game is not limited to the examples described above. In addition to the use of the video distribution platform, the application A may be an application relevant to the game application, and the purchase of game-related goods for a certain amount on the electronic business transaction site that is accessed from the relevant application may be regarded as the record. In addition, the application A may be a SNS application, and the execution of a post with a hashtag relevant to the game application on SNS more than a certain number of times may be regarded as the record. In addition, the application A may be a system relevant to the operation of an eSports tournament, and the collection of a certain achievement in a specific tournament may be regarded as the record.

As described above, in the case of valuable activity that occurs on an application (the secondary trade area) other than the game, any activity can be regarded as the record relevant to the game application. It is obvious that the activation of the secondary trade area can also be accelerated even in the application other than the game.

The activation of the secondary trade area may be learned by utilizing not only the record in the secondary trade area but also the record in the primary trade area in the secondary trade area. It is possible to expect that engagement with respect to the game is multidirectionally increased while crossing the inside and the outside of the game by reverting the right a described in Example 1 to the record (clearing a specific stage, acquiring a certain score, and getting high in rankings) in the game application.

Note that, may provide an application dedicated for record management to the user holding the record, a third person who is neither the provider of the application (such as the video distribution platform) in which the record occurs nor the provider of the application (such as the game application) in which the record is desired to be directly utilized. It is obvious that in such a record management application, not only a record relevant to a single application but also a record relevant to a plurality of applications may be managed in a cross-sectoral manner.

### [Example 2]

In Example 2, the utilization of a copyrighted material in the secondary use (such as an illustration post) will be described as an example. The application collaboration method of this embodiment is capable of contributing to the activation of the distribution of appropriate digital contents while preventing illegal digital contents of the copyrighted material such as manga, illustrations, and videos, and the free distribution thereof.

In the current situation where various digital contents are distributed across various applications, if the n-th order use of the copyrighted material such as manga is managed, collaboration in a plurality of applications is required. However, designing, developing, and operating the collaboration in each of the applications increases a collaboration cost. A model is also considered in which any common platform system is constructed, and each of applications is connected to the platform system, but if the common platform system is managed/operated by a single provider or a single organization, the single provider or the single organization is a single point of failure (SPOF) of the system. In addition, there is also a risk that the provider or the organization arbitrarily infringes the profit of other stake holders with manager privilege. In this case, such a risk becomes serious as the number of applications to be collaborated to the common platform system increases. That is, thereafter, in the system for managing the n-th order use of the copyrighted material across more applications, an application collaboration method is required in which the problem of cost, redundancy, and reliability is solved.

Therefore, in Example 2, an example in which the application collaboration method of this embodiment is applied to the management of the n-th order use of an originally copyrighted material will be described.

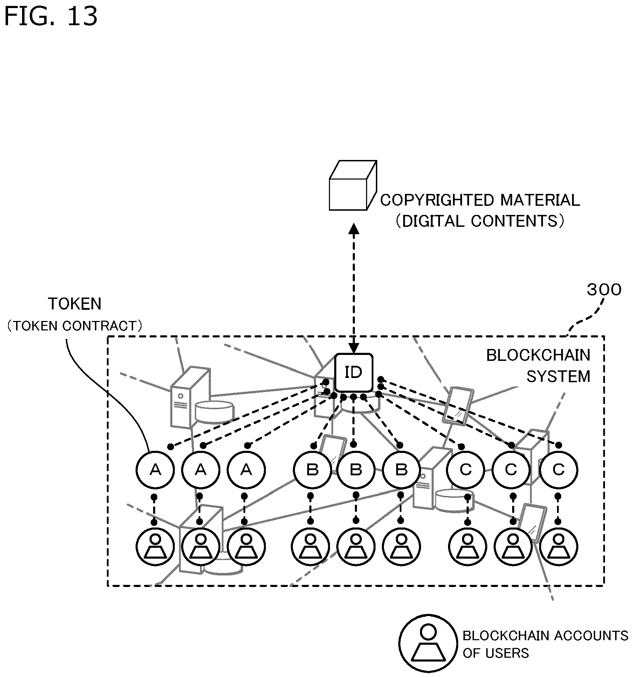

FIG. 13 is a schematic view illustrating the structure of the right token corresponding to the n-th order use-related right in Example 2. As illustrated in FIG. 13, a plurality of right tokens can be minted to an ID of "contents" that are the originally copyrighted material. The "ID" is an identifier (hereinafter, referred to as a contents ID) that is capable of uniquely specifying digital contents (data) of the originally copyrighted material. Specific examples of the contents ID include URL, a decentralized identifier (DID), a contents address of an inter planetary file system (IPFS), or a combination thereof, or the hash of the contents itself.

In Example 2, the token contract that is deployed in the blockchain system 300 manages the token with respect to each of the digital contents, in association with the contents ID. Accordingly, the activity in the trade area based on the n-th order use-related right can be attained.

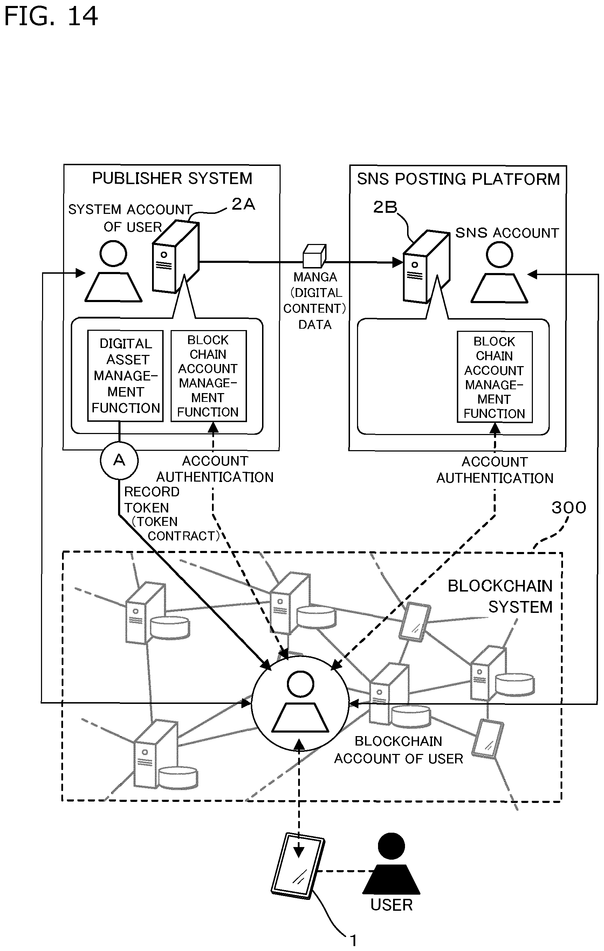

FIG. 14 is a schematic view of the system 100 in Example 2. In Example 2, the application A is a publisher system (an application relevant to privilege management of contents), and the application B is an application for using SNS (hereinafter, simply referred to as SNS) to which contents such as an image and a video can be posted. FIG. 14 corresponds to the outline of the system 100 illustrated in FIG. 1, and the applications A and B are the publisher system and SNS, respectively.

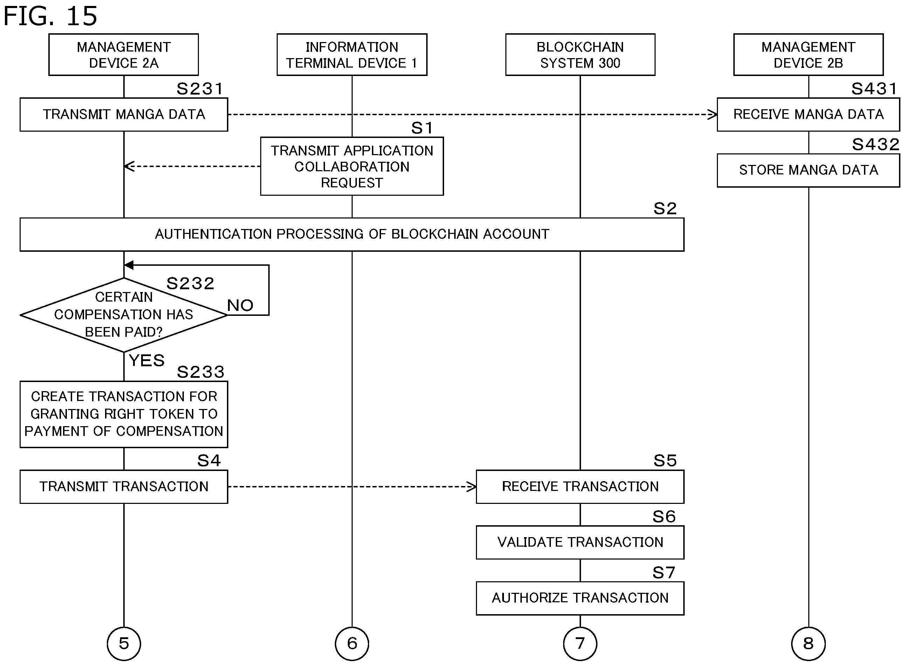

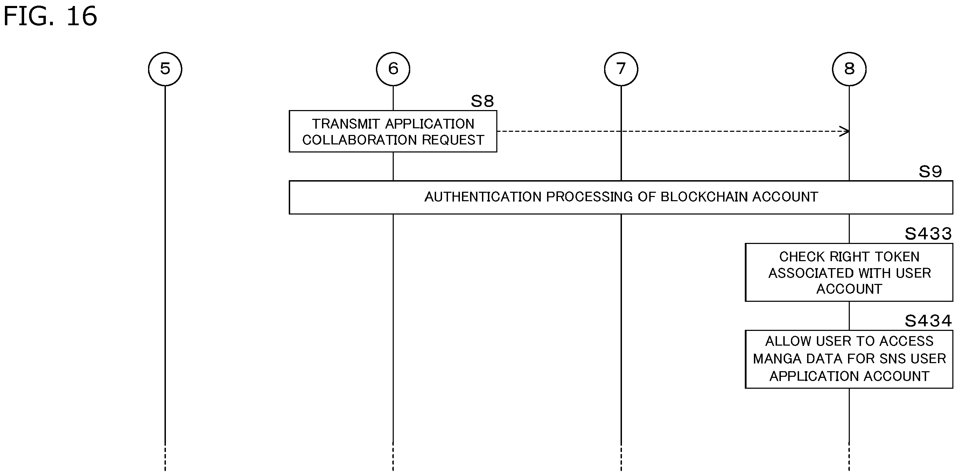

FIG. 15 and FIG. 16 are sequence diagrams illustrating an example of the procedure of the collaboration between the applications in Example 2. In the sequence diagrams of FIG. 15 and FIG. 16, the collaboration between the publisher system and a SNS platform is illustrated. In the procedure of the processing illustrated in the sequence diagrams of FIG. 15 and FIG. 16, the same reference numerals will be applied to the procedure that is not changed from the processing illustrated in the procedure of the basic processing in FIG. 2, and the detailed description will be omitted.

The management device 2A of the publisher system provides (transmits) manga data (the digital contents) to the management device 2B such that the data can be secondarily used on SNS (step S231).

The management device 2B of SNS receives the manga data (step S431), and stores the manga data (step S432).

Then, on SNS, the application collaboration request is transmitted from the information terminal device 1 by the user who desires to use the manga data provided in step S231 (S1). The authentication processing is executed between the management device 2A providing a system service of the publisher system, the information terminal device 1, and the blockchain system 300 (S2).

In a state where the authentication processing is completed, the processing unit 20 of the management device 2A determines whether or not a condition such as whether or not the user has paid a certain compensation to the publisher system (use privilege management) is satisfied, on the basis of the application account (the service account) of the user that is included in the collaboration request (step S232).

If it is determined that the certain condition is not satisfied (S232: NO), the processing unit 20 returns the processing to step S232, and waits until the condition is satisfied. If it is determined that the certain condition is not satisfied (S232: NO), the information terminal device 1 may be notified that the collaboration condition is not satisfied, and the processing may be ended.

In step S232, the processing unit 20 may determine points in the service or the possession of the right token, as the certain condition, in addition to the payment of the compensation by the user according to the use of the contents.

If it is determined that the certain condition is satisfied (S232: YES), the processing unit 20 creates a transaction for granting the right token subjected to the payment of the compensation to the blockchain account received in steps S1 and S2 (step S233). The processing unit 20 broadcasts the created transaction (S4).

The broadcasted transaction is received by the blockchain system 300 (S5), validated (S6), and authorized (S7).

The processing unit 10 of the information terminal device 1 transmits the application collaboration request to the management device 2B of SNS (S8). Accordingly, the authentication processing is executed between the management device 2B, the information terminal device 1, and the blockchain system 300 (S9).

In a state where the authentication processing is completed with respect to the blockchain account of the user, the processing unit 20 of the management device 2B checks the right token associated with the blockchain account (S433). If the right token is not capable of being checked in step S433, the collaboration processing is pause at this time point. In this case, information terminal device 1 may be notified that the collaboration fails.

By checking the content, the processing unit 20 of the management device 2B of SNS in Example 2 allows the application account data of the user to access the manga data that is received in step S431, on SNS (step S434), and ends the processing.

According to step S434, thereafter, the user is capable of accessing and posting the manga data, on SNS. For example, the user is allowed to publish a parody manga in which a caption portion of the manga is replaced and an illustration in which a specific frame image is modified, on SNS.

In Example 2, as described with reference to the sequence diagrams of FIG. 15 and FIG. 16, the publisher system managing the use right of the manga data tokenizes the secondary use right of the manga, grants the secondary use right to the user satisfying the condition, and provides the manga data to the application in which the manga is desired to be utilized. Accordingly, the user is capable of utilizing the secondary use right across the applications. As illustrated in the sequence diagrams of FIG. 15 and FIG. 16, by utilizing the secondary use right with respect to the manga data on SNS, for example, the user is capable of allowing the manga data to be published as secondary creative contents.

In Example 2, the digital contents of the manga have been described as an example, but it is obvious that the digital contents are not limited thereto. Images, voices, and videos in various formats (such as illustrations, songs, animations, TV programs, and the like) are considered as an example of the digital contents. It is obvious that the utilization of the secondary use right is not limited to SNS. In addition, the secondary use right may be utilized in a digital contents production platform and a video distribution platform (a voice distribution application, a radio distribution application, a short video SNS, and a live distribution application).

Tokenizing various rights without limiting to the n-th order use-related right and managing the application in a cross-sectoral manner may lead to solve problems relevant to monetization. For example, the token contract may implement a token selling/transacting function, and a sale profit and a transaction fee thereof may be automatically sent to a blockchain account of an original author. Accordingly, the compensation can be paid for the valid original author by selling/distributing digital contents use rights in various formats. Such contents use right, for example, may be a browsing/viewing right, a secondary use right of live distribution or the like, an early access right with respect to the contents before being published, and the like.

The token contract itself managing the privilege of each of the contents in association with the ID of each of the contents may implement a monetization-related function, and when the right token is used, a crypto-asset corresponding to the sale profit and the transaction fee may be transmitted to the blockchain account of the original author. Accordingly, the original author is capable of performing the monetization even in the secondary trade area.

In the detailed description described above, it is not necessary that the application (the management device 2A) providing the token as the digital asset develops/operates API for acquiring (providing) the information of the digital asset that is shared by being tokenized. Since API is not used, there is no risk of a security hole.

If the application (the management device 2B) on a side using the tokenized digital asset constructs the token contract, it is not necessary to change the implementation in accordance with the application to be collaborated. It is possible to avoid an increase in the development cost according to an increase in the number of applications to be collaborated. When accessing the information that is published on the blockchain, the confidential information that is required in OAuth is not required, and thus, there is no security risk according to the management thereof.

By carrying out the validation of the minting source of the token in a possible format, it is substantially impossible to falsify the token. Therefore, it is possible to greatly reduce a possibility that the use side of the digital asset is deceived by the data of false digital asset.

As described above, in the application collaboration method of the present disclosure, the blockchain system 300 that is a distributed system with high transparency in which a single management subject is not present is utilized as the management platform of the digital asset. Accordingly, the problem of redundancy and reliability, which is concerned in the case of using a platform system managed by a single organization, is greatly relieved. In addition, since the data recorded in the blockchain system 300 has high falsification resistance in terms of data structure, it is extremely difficult to perform an illicit manipulation with respect to the recorded data (such as the right granted). According to such a platform system, the application collaboration (contents sharing) between competing stake holders can also be realistically performed.

The embodiments disclosed as described above are an example in all respects and are not restrictive. The scope of the present invention is indicated by the claims and includes the meaning equivalent to the claims and all modifications within the claims.

### [Description of Reference Numerals]

- 1: Information terminal device
- 10: Processing unit
- 11: Storage unit
- 13: Display unit
- 14: Operation unit
- 1P: Information terminal program
- 2: Management device (first device, second device)
- 20: Processing unit
- 21: Storage unit
- 2P: Management program
- 300: Blockchain system

## Claims

1. An application collaboration method, comprising:
storing, by an information terminal device, application account data for a user of a first application and a second application, and blockchain account data of the user in a blockchain system;
transmitting a collaboration request of the first application and the second application to a first device providing the first application or to a second device providing the second application, in association with the blockchain account data;
causing the first device to transmit a grant request of a token based on a usage record of the first application of the user that is associated with the application account data to the blockchain account data to the blockchain system, on the basis of the collaboration request; and
causing the second device to acquire data of the presence or absence of the token granted to the blockchain account data, the amount of token, and content or a condition of the token.

2. An application collaboration method, comprising:
accepting a request including minting of a token based on a usage record in a first application and granting of the token to blockchain account data in a blockchain system for a user of the first application from a first device providing the first application;
executing the minting of the token and the granting of the token to the blockchain account data in the blockchain system, on the basis of the accepted request;
accepting a reference request of the presence or absence of the token associated with the blockchain account data, the amount of token, and content or a condition of the token from a second device providing a second application; and
transmitting a reference result to the second device in accordance with the reference request.

3. The application collaboration method according to claim 1 or 2,
wherein the token is a non-fungible token, and
the second device is caused to acquire unique data of the token granted to the blockchain account data.

4. The application collaboration method according to claim 1 or 2,
wherein the token is a fungible token, and
a condition is stored for a minting amount of the token granted to the blockchain account data and for a holdable amount, a transferable amount, or a burnable amount with respect to the blockchain account data.

5. The application collaboration method according to any one of claims 1 to 4,
wherein the token is non-transferable, and
a transfer request of the token granted on the basis of the request from the first device to another blockchain account data from the blockchain account data of the user being a granting target is disabled.

6. The application collaboration method according to any one of claims 1 to 4,
wherein the token is transferable, and
the second device is caused to refer to whether or not the token is transferred to the blockchain account data of the user from the first device from the blockchain system.

7. The application collaboration method according to any one of claims 1 to 6,
wherein the token is a burnable token,
a transaction for burning a token according to content of processing that is executed by the token in the second device from tokens which have been granted to the blockchain account data is broadcasted to the blockchain system, and
the second device is caused to check that the tokens which have been granted to the blockchain account data are reduced or lost before and after executing the processing.

8. The application collaboration method according to any one of claims 1 to 7,
wherein the second device is caused to determine whether or not the token is granted to the blockchain account data of the user with respect to the blockchain system for each predetermined timing.

9. The application collaboration method according to any one of claims 1 to 8,
wherein the second device validates a minting source of the token on the basis of public key data corresponding to a private key to be used for granting the token to the blockchain account data.

10. The application collaboration method according to any one of claims 1 to 9,
wherein a benefit based on the data of the presence or absence of the token associated with the blockchain account data, the amount of token, and the content or the condition of the token is granted from the second device.

11. The application collaboration method according to any one of claims 1 to 10,
wherein one of the first application and the second application is an application for a content posting platform, and the other is an application for a service provided by a game provider.

12. The application collaboration method according to any one of claims 1 to 10,
wherein the first application is an application relevant to use privilege management of contents, and the second application is an application of a content posting platform using the contents.

13. The application collaboration method according to claim 12,
wherein a transaction of the token is accepted, and payment of a compensation to blockchain account data of an original author of the contents is executed in accordance with the amount of transaction.

14. A computer program for allowing a computer to execute processing of:
storing application account data for a user of a first application and a second application and blockchain account data of the user in a blockchain system; and
transmitting a collaboration request of the first application and the second application to a first device providing the first application or a second device providing the second application, in association with the blockchain account data.

15. The computer program according to claim 14,
wherein data of a benefit in the second application based on the presence or absence of a token granted to the blockchain account data, the amount of token, and content or a condition of the token is granted from the second device.

16. A computer program for allowing a computer storing data of an application in association with application account data of a user to execute processing of:
executing authentication processing with respect to blockchain account data when receiving a collaboration request with another application including the application account data and the blockchain account data of the user; and
broadcasting a transaction for granting a token based on a usage record of the application of the user to the blockchain account data to a blockchain system when the blockchain account data is authenticated.

17. A computer program for allowing a computer storing data of an application in association with application account data of a user to execute processing of:
executing authentication processing with respect to blockchain account data when receiving a collaboration request with another application including the application account data and the blockchain account data of the user; and
determining whether or not a token from the another application is granted to the blockchain account data in a blockchain system when the blockchain account data is authenticated.

18. The computer program according to claim 17,
wherein when it is determined that the token from the another application is granted, a benefit of the application is granted to the application account data in accordance with the amount of token, and content or a condition of the token.

19. An application collaboration system, comprising:
an information terminal device of a user;
a first device providing a first application; and
a second device providing a second application,
wherein the information terminal device stores application account data for the user of the first application and the second application and blockchain account data of the user in a blockchain system,
the information terminal device transmits a collaboration request of the first application and the second application to the first device providing the first application or the second device providing the second application, in association with the blockchain account data,
the first device broadcasts a transaction for granting a token based on a usage record of the first application of the user to the blockchain account data of the user to the blockchain system, in accordance with the request,
the second device acquires data of the presence or absence of the token granted to the blockchain account data, the amount of token, and content or a condition of the token, and
the second device executes processing in accordance with the presence or absence of the token, the amount of token, and the content or the condition of the token, which are acquired, in association with the application account data of the second application.
